# EUROPEAN PATENT APPLICATION

(11) **EP 4 811 740 A1**
(43) Date of publication of application: **23.09.2026**
(21) Application number: 25226271.2
(22) Date of filing: 22.12.2025
(51) Int. Cl.: H04L 41/14

(54) **METHODS AND SYSTEMS FOR DETERMINING OPTIMIZED CLOUD ARCHITECTURE USING A MODELLING-BASED APPROACH**

(30) Priority: 18.03.2025 IN 202521024137
(71) Applicant: Tata Consultancy Services Limited, Maharashtra (IN)
(72) Inventor: RAMESH, Manju, 201309 Noida, Uttar Pradesh (IN); PHALAK, Chetan Dnyandeo, 400021 Mumbai, Maharashtra (IN); CHOUDHURY, Sharod Roy, 400076 Mumbai, Maharashtra (IN); CHAHAL, Dheeraj, 411006 Pune, Maharashtra (IN); SINGHAL, Rekha, New York, New York, 10044 (US)
(74) Representative: Goddar, Heinz J.

(57) **Abstract**

The disclosure relates generally to methods and systems for determining optimized cloud architecture using a modelling-based approach. Most of the conventional techniques for cloud architecture design pose limited capabilities. The methods and systems of the present disclosure introduce an end-to-end framework consisting of a workload-aware, model-based approach for designing optimal cloud deployment architectures, and for recommending cloud architecture designs tailored to deploying applications in the cloud. The service-specific parameters are fed into underlying cost models and service specific performance models, which then generate individual service and end-to-end deployment cost and performance estimates. Once the basic architecture is built, the user can perform *what-if* and *if- what* analysis. The impact on performance (performance estimation) and cost (cost estimation) by replacing services or changing the configurations can be analyzed using the models in the user dashboard to design the optimized cloud architecture.

## Description

### CROSS-REFERENCE TO RELATED APPLICATIONS AND PRIORITY

The present application claims priority from Indian application no. 202521024137, filed on March 18, 2025.

### TECHNICAL FIELD

The disclosure herein generally relates to a cloud infrastructure management, and, more particularly, to methods and systems for determining optimized cloud architecture using a modelling-based approach.

### BACKGROUND

Cloud adoption is experiencing rapid growth across enterprises. However, the enterprises are facing challenges in controlling cloud expenditures while simultaneously maintaining desired levels of application performance. Estimating cost and performance for making informed decisions while building or migrating an application to cloud is a major challenge for architects, developers, and performance engineers. This is primarily due to the availability of a large number of cloud services to choose from, their numerous possible configurations, and complex interaction between them. Moreover, the choice of a cloud service and its configuration depends on multiple factors such as expected service-level agreements (SLAs), workload, available budget etc. Addressing these requirements while designing cloud architecture for an application is a challenging task for cloud architects and practitioners.

While Cloud Service Providers (CSPs) furnish cost calculators to assist users in estimating deployment expenses, users remain responsible for identifying the most suitable services and optimal configurations for their specific applications. Moreover, application performance data from CSPs is typically available only post-deployment, offering a reactive view of performance. Predicting application performance before deployment, taking into account specific workload demands, therefore poses a considerable challenge given the current limitations in CSP-provided tools and services. A framework that addresses this gap by facilitating the selection of optimal cloud services and architecture and that also provides pre-deployment application performance estimations would significantly empower architects, developers, and performance engineers to make well-informed choices during cloud migration.

While major cloud vendors offer extensive resources, including documentation and architectural patterns, aimed at promoting best practices and appropriate service selection, the sheer volume of this information presents a significant challenge. For example, the 3000-page document on AWS's S3 object storage highlights the difficulty of processing and applying this knowledge. The task of assimilating this detail and mapping it to specific business and technical specifications is inherently complex.

In addition, the CSPs often offer a variety of architectural templates covering domains such as Internet-of-Things (IoT), retail, manufacturing, and life sciences. However, maximizing the benefit from these repositories is hampered by their format. Typically presented as static Portable Document Format (PDF) documents or JPEG images, these templates are difficult to manipulate for scenario analysis such as *what-if* and *if-what* assessments. This makes evaluating cost and performance trade-offs from existing architectures a considerable challenge.

Most of the conventional techniques for cloud architecture design pose limited capabilities, primarily due to the lack of two crucial features:
- Workload-Aware performance prediction: These tools often fail to generate accurate, workload-specific performance estimates for individual cloud services and comprehensive, end-to-end deployments.
- Automated bottleneck detection: Existing tools typically do not offer automated mechanisms for identifying performance bottlenecks within a live, production application architecture.

The inherent complexity of cloud architecture performance prediction, stemming from a vast array of services and diverse workload characteristics, has limited the development of robust tools. While research has examined individual service performance, the end-to-end architecture performance is significantly affected by complex interactions between constituent services. For instance, network bandwidth between two services is contingent on their configuration parameters (e.g., cores, memory).

Further, the rapid pace of innovation in cloud services, with providers (CSPs) constantly releasing new offerings and features, creates a highly dynamic infrastructure environment. This rapid evolution means that even carefully optimized cloud architectures can quickly become suboptimal, leading to performance and cost inefficiencies. The continuous need to review and evaluate cloud deployments therefore presents a significant hurdle.

### SUMMARY

Embodiments of the present disclosure present technological improvements as solutions to one or more of the above-mentioned technical problems recognized by the inventors in conventional systems.

In an aspect, a processor-implemented method for determining optimized cloud architecture using a modelling-based approach is provided. The method comprising: receiving (i) one or more technical specifications, (ii) one or more service level agreements, (iii) one or more business specifications, and (iv) one or more user requirements, of an input cloud application for which an optimal cloud architecture is to be determined before deployment; identifying one or more optimal cloud services from a plurality of cloud services, based on the one or more technical specifications, the one or more user requirements, the one or more service level agreements, and the one or more business specifications, using one or more Large Language Model (LLMs); extracting one or more cloud service specific parameters for each of the one or more optimal cloud services, in terms of one or more service metrics and one or more service categories, using a data extraction technique; determining a deployment cost and one or more performance metrics of each of the one or more optimal cloud services for the input cloud application, based on the one or more service specific parameters, using one or more deployment cost models and one or more performance models, respectively; optimizing a cloud service configuration associated with each optimal cloud service of the one or more optimal cloud services, based on the deployment cost and the one or more performance metrics, to determine an optimized cloud architecture for the input cloud application; receiving a current deployed cloud architecture of the input cloud application after deployment; retrieving one or more cloud service configurations and one or more cloud services present in the current deployed cloud architecture; generating an adjacency matrix of the input cloud application by converting the current deployed cloud architecture, wherein the adjacency matrix comprises one or more cloud service configurations, one or more cloud services and one or more objects associated with each of the one or more cloud service configurations and the one or more cloud services; and identify one or more bottleneck cloud service configurations out of the one or more cloud service configurations and one or more bottleneck cloud services out of the one or more cloud services having the one or more bottlenecks present in the current deployed cloud architecture, based on the adjacency matrix through a Retrieval-Augmented Generation (RAG) based approach.

In another aspect, a system for determining optimized cloud architecture using a modelling-based approach is provided. The system includes: a memory storing instructions; one or more Input/Output (I/O) interfaces; and one or more hardware processors coupled to the memory via the one or more I/O interfaces, wherein the one or more hardware processors are configured by the instructions to: receive (i) one or more technical specifications, (ii) one or more service level agreements, (iii) one or more business specifications, and (iv) one or more user requirements, of an input cloud application for which an optimal cloud architecture is to be determined before deployment; identify one or more optimal cloud services from a plurality of cloud services, based on the one or more technical specifications, the one or more user requirements, the one or more service level agreements, and the one or more business specifications, using one or more Large Language Model (LLMs); extract one or more cloud service specific parameters for each of the one or more optimal cloud services, in terms of one or more service metrics and one or more service categories, using a data extraction technique; determine a deployment cost and one or more performance metrics of each of the one or more optimal cloud services for the input cloud application, based on the one or more service specific parameters, using one or more deployment cost models and one or more performance models, respectively; optimize a cloud service configuration associated with each optimal cloud service of the one or more optimal cloud services, based on the deployment cost and the one or more performance metrics, to determine an optimized cloud architecture for the input cloud application; receive a current deployed cloud architecture of the input cloud application after deployment; retrieve one or more cloud service configurations and one or more cloud services present in the current deployed cloud architecture; generate an adjacency matrix of the input cloud application by converting the current deployed cloud architecture, wherein the adjacency matrix comprises one or more cloud service configurations, one or more cloud services and one or more objects associated with each of the one or more cloud service configurations and the one or more cloud services; and identify one or more bottleneck cloud service configurations out of the one or more cloud service configurations and one or more bottleneck cloud services out of the one or more cloud services having the one or more bottlenecks present in the current deployed cloud architecture, based on the adjacency matrix through a Retrieval-Augmented Generation (RAG) based approach.

In yet another aspect, there are provided one or more non-transitory machine-readable information storage mediums comprising one or more instructions which when executed by one or more hardware processors cause: receiving (i) one or more technical specifications, (ii) one or more service level agreements, (iii) one or more business specifications, and (iv) one or more user requirements, of an input cloud application for which an optimal cloud architecture is to be determined before deployment; identifying one or more optimal cloud services from a plurality of cloud services, based on the one or more technical specifications, the one or more user requirements, the one or more service level agreements, and the one or more business specifications, using one or more Large Language Model (LLMs); extracting one or more cloud service specific parameters for each of the one or more optimal cloud services, in terms of one or more service metrics and one or more service categories, using a data extraction technique; determining a deployment cost and one or more performance metrics of each of the one or more optimal cloud services for the input cloud application, based on the one or more service specific parameters, using one or more deployment cost models and one or more performance models, respectively; optimizing a cloud service configuration associated with each optimal cloud service of the one or more optimal cloud services, based on the deployment cost and the one or more performance metrics, to determine an optimized cloud architecture for the input cloud application; receiving a current deployed cloud architecture of the input cloud application after deployment; retrieving one or more cloud service configurations and one or more cloud services present in the current deployed cloud architecture; generating an adjacency matrix of the input cloud application by converting the current deployed cloud architecture, wherein the adjacency matrix comprises one or more cloud service configurations, one or more cloud services and one or more objects associated with each of the one or more cloud service configurations and the one or more cloud services; and identifying one or more bottleneck cloud service configurations out of the one or more cloud service configurations and one or more bottleneck cloud services out of the one or more cloud services having the one or more bottlenecks present in the current deployed cloud architecture, based on the adjacency matrix through a Retrieval-Augmented Generation (RAG) based approach.

In an embodiment, each of the one or more optimal cloud services and each of the plurality of cloud services, comprises a cloud service configuration for one or more workload requirements, and wherein each cloud service configuration comprises one or more cloud service sub-configurations.

In an embodiment, identifying the one or more optimal cloud services from the plurality of cloud services, based on the one or more technical specifications, the one or more user requirements, the one or more service level agreements, and the one or more business specifications, using the one or more Large Language Model (LLMs), comprises: pre-processing the one or more technical specifications, the one or more user requirements, the one or more service level agreements, and the one or more business specifications, using one or more data pre-processing techniques, to obtain one or more pre-processed technical specifications, one or more pre-processed user requirements, one or more pre-processed service level agreements, and one or more pre-processed business specifications, respectively; create one or more prompts for the one or more pre-processed technical specifications, the one or more pre-processed user requirements, the one or more pre-processed service level agreements, and the one or more pre-processed business specifications, using one or more constraints; and passing the prompt to the one or more Large Language Model (LLMs) to identify one or more optimal cloud services from the plurality of cloud services.

In an embodiment, the one or more service metrics are a performance service metric, and a deployment cost service metric, and the one or more service categories are a compute category, a storage category, and a network category, and wherein: the one or more service specific parameters associated with the performance service metric under the compute category are: one or more service resource configurations, number of service instances, and one or more application resource requirements, the one or more service specific parameters associated with the deployment cost service metric under the compute category are: a service instance type, an instance usage duration, an instance workload, and number of service instances, the one or more service specific parameters associated with the performance service metric under the storage category are: a data size, a type of operation (read/write), a provisioned service instance type, and number of provisioned instances, the one or more service specific parameters associated with the deployment cost service metric under the storage category are: a storage size, number of read/write operations, an operation type, the provisioned service instance type, number of provisioned service instances, the instance usage duration, and a provisioned storage size, the one or more service specific parameters associated with the performance service metric under the network category are: a source and destination region, a data size, and a network bandwidth, and the one or more service specific parameters associated with the deployment cost service metric under the network category are: the source and destination region, the data size, a network usage duration, number of connections, and number of public addresses.

In an embodiment, the performance models are obtained by training a regression model using performance benchmarking data, and the deployment cost models are implemented using an analytical cost model.

It is to be understood that both the foregoing general description and the following detailed description are exemplary and explanatory only and are not restrictive of the invention, as claimed.

### BRIEF DESCRIPTION OF THE DRAWINGS

The accompanying drawings, which are incorporated in and constitute a part of this disclosure, illustrate exemplary embodiments and, together with the description, serve to explain the disclosed principles:
FIG. 1 is an exemplary block diagram of a system for determining optimized cloud architecture using a modelling-based approach, in accordance with some embodiments of the present disclosure.
FIG. 2 is an exemplary end-to-end framework of the system of FIG. 1, for determining optimized cloud architecture using a modelling-based approach, in accordance with some embodiments of the present disclosure.
FIGS. 3A and 3B illustrate exemplary flow diagrams of a processor-implemented method for determining optimized cloud architecture using a modelling-based approach, using the system of FIG. 1, in accordance with some embodiments of the present disclosure.
FIG. 4 is a flowchart showing the steps for identifying one or more optimal cloud services from a plurality of cloud services, based on the one or more technical specifications, the one or more user requirements, the one or more service level agreements, and the one or more business specifications, using one or more Large Language Model (LLMs), in accordance with some embodiments of the present disclosure.
FIG. 5 illustrates an exemplary deployment architecture of a retail application use case in Amazon Web Services (AWS) cloud.
FIG. 6A is a graph showing a comparison of an actual and a predicted latency for an exemplary application workflow of a retail application for different workloads (number of concurrent users), in accordance with some embodiments of the present disclosure.
FIG. 6B is a graph showing an actual and predicted hourly cost for cloud services used by retail application for a workload of 500 transactions, in accordance with some embodiments of the present disclosure.
FIG. 7A shows a comparison of the cost of database instances with varying concurrency, in accordance with some embodiments of the present disclosure.
FIG. 7B shows the cost incurred by catalog microservice for different workloads, when deployed in Amazon EKS node and Lambda functions, in accordance with some embodiments of the present disclosure.

### DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments.

The dynamic nature of cloud infrastructure, stemming from evolving services and their intricate interactions, presents significant obstacles to the accurate prediction of application deployment costs and performance. Inaccurate estimations risk project failure due to cost overruns and performance degradation.

Several conventional tools facilitate cloud architecture design. While many of these tools offer accurate cost estimations for individual cloud service, a notable gap exists in their ability to predict pre-deployment performance. To address this, conventional approaches have explored various techniques for estimating both performance and cost, including queuing models, simulations, and artificial intelligence (AI). The queuing models have proven useful for analyzing performance within cloud environments, particularly in modeling virtual machines (VMs). However, constructing accurate queuing models for a large array of cloud services presents a significant challenge due to the difficulty in obtaining the necessary parameters. This makes regression-based models, which leverage existing benchmarking data, a more practical approach for many situations. Agent-based modeling has also been explored for simulating cloud environments, primarily focusing on resource management metrics like utilization, energy consumption, and service-level agreement (SLA) violations.

A graph-based approach for cloud cost estimation is present in the art. Furthermore, the application of AI in cloud environments has gained traction, with studies examining data migration from on-premises infrastructures to the cloud. The AI-driven frameworks have also been developed to recommend sustainable cloud architectures, and AI-based cost estimation methods have been investigated for predicting the cost of futuristic workloads. Cost-optimization by rescheduling microservices in a multi-cloud environment is presented in some conventional approaches. A data driven reactive technique for cost optimization is also disclosed in the art. These studies provide valuable insights; however, a specific focus on Pareto-optimal pre-deployment cost and performance estimations for a given workload does not seem to be their primary aim.

A modeling and simulation approach for cost optimization and performance analysis of transactional applications in a hybrid environment is presented the art; however, its scope is restricted to virtual machine optimization. Furthermore, some of the conventional approaches such as discrete-event simulator, Simcan2Cloud, and so on aim to estimate the performance and cost of cloud infrastructure. A cost and performance comparison of AWS and Google Cloud Platform (GCP) in the context of software development is described. A deep learning-based recommendation system that utilizes social feedback and an auto-encoder for cloud recommendations is present the art. While some conventional techniques investigate a performance and cost-aware multi-cloud overlay, its focus is specifically on communication aspects within a multi-cloud setting.

The present disclosure solves the technical problems in the art with the methods and systems for determining optimized cloud architecture using a modelling-based approach. The methods and systems of the present disclosure introduce an end-to-end framework consisting of a workload-aware, model-based approach for designing optimal cloud deployment architectures, and for recommending cloud architecture designs tailored to deploying applications in the cloud. Leveraging the models (performance and cost models) trained on historical data and incorporating user-defined specifications, the end-to-end framework of the present disclosure identifies suitable cloud services, and their configurations aligned with specific use cases. Furthermore, the end-to-end framework of the present disclosure provides estimates for both the performance and cost implications of the recommended architecture.

The end-to-end framework of the present disclosure generates workload-aware Pareto-optimal cloud architecture solutions that effectively balance application deployment costs and performance. The performance and cost models are developed for commonly utilized cloud services across compute, database, network, and storage domains, which are instrumental in the architecture design process. Further, the methods and systems of the present disclosure propose a methodology for identifying performance and cost bottlenecks within existing application deployment architectures, followed by recommendations for new, improved architectures along with predicted cost and performance metrics.

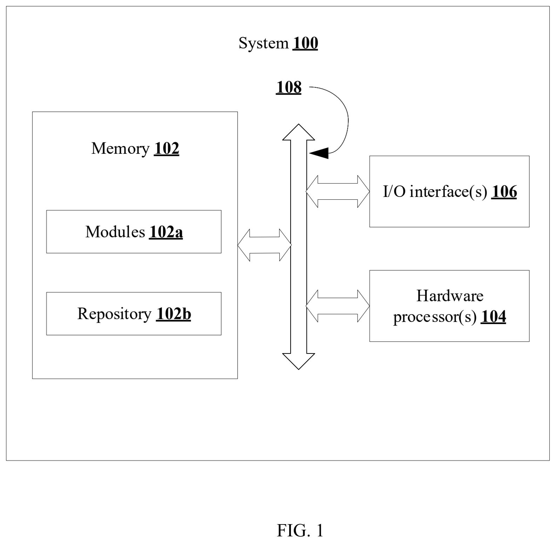

Referring now to the drawings, and more particularly to FIG. 1 through FIG. 7B, where similar reference characters denote corresponding features consistently throughout the figures, there are shown preferred embodiments, and these embodiments are described in the context of the following exemplary systems and/or methods.

FIG. 1 is an exemplary block diagram of a system 100 for determining optimized cloud architecture using a modelling-based approach, in accordance with some embodiments of the present disclosure. In an embodiment, the system 100 includes or is otherwise in communication with one or more hardware processors 104, communication interface device(s) or input/output (I/O) interface(s) 106, and one or more data storage devices or memory 102 operatively coupled to the one or more hardware processors 104. The one or more hardware processors 104, the memory 102, and the I/O interface(s) 106 may be coupled to a system bus 108 or a similar mechanism.

The I/O interface(s) 106 may include a variety of software and hardware interfaces, for example, a web interface, a graphical user interface (GUI), and the like. The I/O interface(s) 106 may include a variety of software and hardware interfaces, for example, interfaces for peripheral device(s), such as a keyboard, a mouse, an external memory, a plurality of sensor devices, a printer and the like. Further, the I/O interface(s) 106 may enable the system 100 to communicate with other devices, such as web servers and external databases.

The I/O interface(s) 106 can facilitate multiple communications within a wide variety of networks and protocol types, including wired networks, for example, local area network (LAN), cable, etc., and wireless networks, such as Wireless LAN (WLAN), cellular, or satellite. For the purpose, the I/O interface(s) 106 may include one or more ports for connecting a number of computing systems with one another or to another server computer. Further, the I/O interface(s) 106 may include one or more ports for connecting a number of devices to one another or to another server.

The one or more hardware processors 104 may be implemented as one or more microprocessors, microcomputers, microcontrollers, digital signal processors, central processing units, state machines, logic circuitries, and/or any devices that manipulate signals based on operational instructions. Among other capabilities, the one or more hardware processors 104 are configured to fetch and execute computer-readable instructions stored in the memory 102. In the context of the present disclosure, the expressions 'processors' and 'hardware processors' may be used interchangeably. In an embodiment, the system 100 can be implemented in a variety of computing systems, such as laptop computers, portable computers, notebooks, hand-held devices, workstations, mainframe computers, servers, a network cloud and the like.

The memory 102 may include any computer-readable medium known in the art including, for example, volatile memory, such as static random access memory (SRAM) and dynamic random access memory (DRAM), and/or non-volatile memory, such as read only memory (ROM), erasable programmable ROM, flash memories, hard disks, optical disks, and magnetic tapes. In an embodiment, the memory 102 includes a plurality of modules 102a and a repository 102b for storing data processed, received, and generated by one or more of the plurality of modules 102a. The plurality of modules 102a may include routines, programs, objects, components, data structures, and so on, which perform particular tasks or implement particular abstract data types.

The plurality of modules 102a may include programs or computer-readable instructions or coded instructions that supplement applications or functions performed by the system 100. The plurality of modules 102a may also be used as signal processor(s), state machine(s), logic circuitries, and/or any other device or component that manipulates signals based on operational instructions. Further, the plurality of modules 102a can be used by hardware, by computer-readable instructions executed by the one or more hardware processors 104, or by a combination thereof. In an embodiment, the plurality of modules 102a can include various sub-modules (not shown in FIG. 1). Further, the memory 102 may include information pertaining to input(s)/output(s) of each step performed by the processor(s) 104 of the system 100 and methods of the present disclosure.

The repository 102b may include a database or a data engine. Further, the repository 102b amongst other things, may serve as a database or includes a plurality of databases for storing the data that is processed, received, or generated as a result of the execution of the plurality of modules 102a. Although the repository 102b is shown internal to the system 100, it will be noted that, in alternate embodiments, the repository 102b can also be implemented external to the system 100, where the repository 102b may be stored within an external database (not shown in FIG. 1) communicatively coupled to the system 100. The data contained within such external database may be periodically updated. For example, data may be added into the external database and/or existing data may be modified and/or non-useful data may be deleted from the external database. In one example, the data may be stored in an external system, such as a Lightweight Directory Access Protocol (LDAP) directory and a Relational Database Management System (RDBMS). In another embodiment, the data stored in the repository 102b may be distributed between the system 100 and the external database.

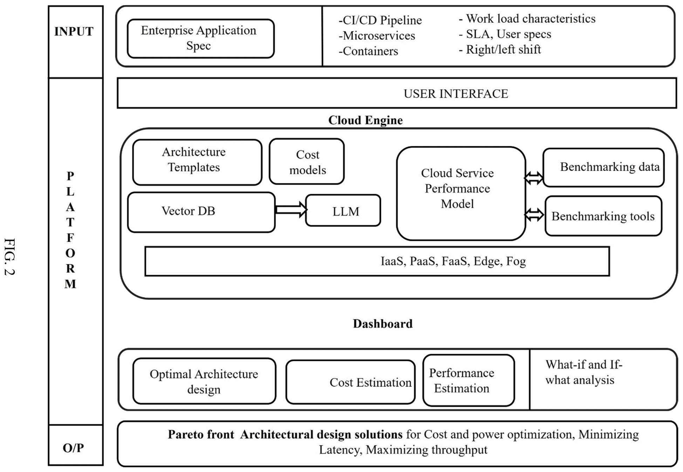

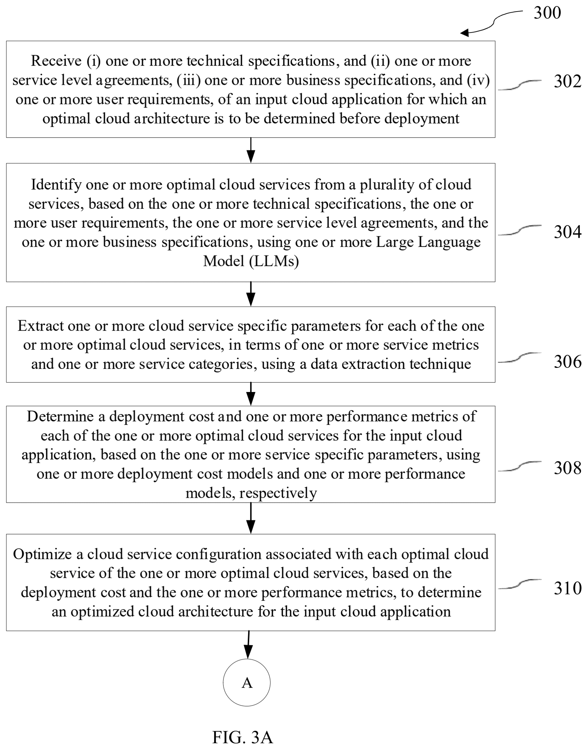

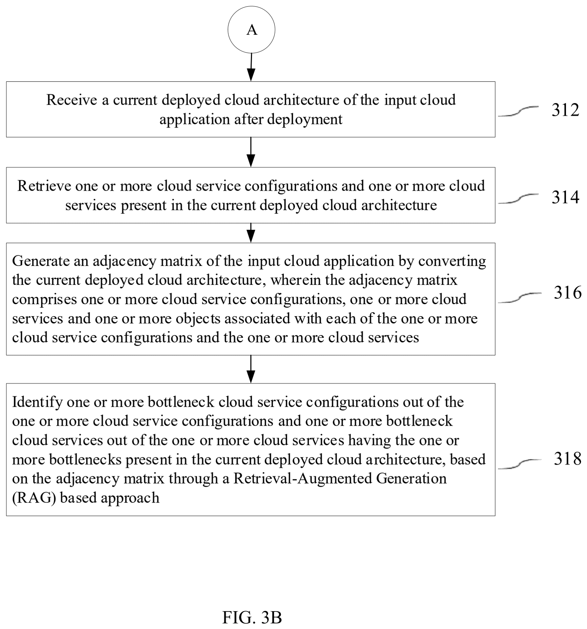

Referring collectively to FIG. 2 and FIGS. 3A and 3B, components and functionalities of the system 100 are described in accordance with an example embodiment of the present disclosure. For example, FIG. 2 is an exemplary end-to-end framework of the system 100 of FIG. 1, for determining optimized cloud architecture using a modelling-based approach, in accordance with some embodiments of the present disclosure. As shown in FIG. 2, the end-to-end framework of the present disclosure receives inputs such as business specifications, technical requirements, SLAs, other relevant parameters, and so on through the user interface from a user. These inputs are preprocessed and transformed into prompts for a Large Language Model (LLM) which is present in the cloud engine. The LLM's inference generates a list of suitable cloud services with interconnections, which are then displayed on the canvas by mapping each service to its corresponding logo and associated parameters stored in the repository.

Once the architecture is established, selecting any service will present a form containing fields to specify service-specific parameters. These parameters are fed into underlying cost models and service specific performance models, which then generate individual service and end-to-end deployment cost and performance estimates. Once the basic architecture is built, the user can perform *what-if* and *if- what* analysis. The impact on performance (performance estimation) and cost (cost estimation) by replacing services or changing the configurations can be analyzed using the models in the user dashboard to design the optimized cloud architecture.

For example, FIGS. 3A and 3B illustrate exemplary flow diagrams of a processor-implemented method 300 for determining optimized cloud architecture using a modelling-based approach, using the system 100 of FIG. 1, in accordance with some embodiments of the present disclosure. Although steps of the method 300 including process steps, method steps, techniques or the like may be described in a sequential order, such processes, methods, and techniques may be configured to work in alternate orders. In other words, any sequence or order of steps that may be described does not necessarily indicate a requirement that the steps be performed in that order. The steps of processes described herein may be performed in any practical order. Further, some steps may be performed simultaneously, or some steps may be performed alone or independently.

At step 302 of the method 300, the one or more input/output (I/O) interfaces 106 of the system 100 are configured to receive (i) one or more technical specifications, and (ii) one or more service level agreements, (iii) one or more business specifications, and (iv) one or more user requirements, of an input cloud application for which an optimal cloud architecture is to be determined before deployment. The input cloud application is the application or a set of applications to be deployed on the cloud.

In an embodiment, the one or more technical specifications of the input cloud application includes but are not limited to a description of input cloud application functionality, architecture (such as purpose, data flow) of the input cloud application, infrastructure requirements (such as compute, networking, scalability) of the input cloud application, and data storage requirements (such as structured/unstructured, data access patterns) of the input cloud application.

In an embodiment, the one or more business specifications of the input cloud application includes but are not limited to defined performance requirements (such as latency, throughput, error rates) of the input cloud application, resource usage (such as energy), budget of the input cloud application, and cost constraints of the input cloud application to be deployed on the cloud.

In an embodiment, one or more business specifications of the input cloud application includes but are not limited to business context of the enterprise or the input cloud application overview, target audience and user needs (such as number of users, geographic location), defined time to market, cloud deployment models (such as public, private, hybrid, multi-cloud, any constraints or preferences regarding the cloud service providers (CSPs).

In an embodiment, the one or more user requirements of the input cloud application include but are not limited to the user needs such as number of users, geographic location, defined time to market, and so on. Furthermore, other relevant parameters such as deployment management, operations considerations (such as deployment automation, monitoring and logging, disaster recovery and business continuity), are considered.

At step 304 of the method 300, the one or more hardware processors 104 of the system 100 are configured to identify one or more optimal cloud services from a plurality of cloud services, based on the one or more technical specifications, the one or more user requirements, the one or more service level agreements, and the one or more business specifications received at step 302 of the method 300. The plurality of cloud services are the services available on the cloud from multiple cloud vendors or CSPs. In accordance with the present disclosure, one or more Large Language Model (LLMs) are employed to identify the one or more optimal cloud services from the plurality of cloud services.

Each of the one or more optimal cloud services {*S*₁,*S*₂,*S*₃, ...,*Sₙ*} and each of the plurality of cloud services {*S*₁,*S*₂,*S*₃, ..., *Sₙ*} includes respective cloud service configurations {*C*₁,*C*₂,*C*₃, ..., *Cₙ*} for one or more workload requirements {*w*₁,*w*₂,*w*₃, ..., *wₙ*}. Each of the cloud service configurations {*C*₁,*C*₂,*C*₃, ..., *Cₙ*} includes: (i) compute requirements such as one or more instances of number of cores, virtual machine (VM) type, and memory size, (ii) one or more storage services consisting of file system, storage size, and so on, and (iii) one or more HPC network services. Further, each cloud service configuration {*C*₁,*C*₂,*C*₃, ..., *Cₙ*} includes one or more cloud service sub-configurations.

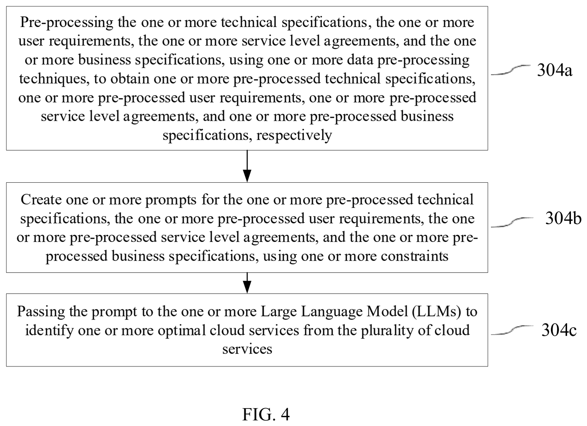

FIG. 4 is a flowchart showing the steps for identifying the one or more optimal cloud services from the plurality of cloud services, based on the one or more technical specifications, the one or more user requirements, the one or more service level agreements, and the one or more business specifications, using the one or more Large Language Model (LLMs), in accordance with some embodiments of the present disclosure. As shown in FIG. 4, identifying the one or more optimal cloud services from the plurality of cloud services is explained through steps 304a to 304c.

At step 304a, the one or more technical specifications, the one or more user requirements, the one or more service level agreements, and the one or more business specifications received at step 302 of the method 300, are pre-processed using one or more data pre-processing techniques, to obtain one or more pre-processed technical specifications, one or more pre-processed user requirements, one or more pre-processed service level agreements, and one or more pre-processed business specifications, respectively.

The one or more data pre-processing techniques apply one or more pre-processing operations such as irrelevant data removal, transforming the data in the required structured format, reducing the size without losing important information, and so on, on the one or more technical specifications, the one or more user requirements, the one or more service level agreements, and the one or more business specifications, to obtain the one or more pre-processed technical specifications, the one or more pre-processed user requirements, the one or more pre-processed service level agreements, and the one or more pre-processed business specifications, respectively.

At step 304b, one or more prompts are created for the one or more pre-processed technical specifications, the one or more pre-processed user requirements, the one or more pre-processed service level agreements, and the one or more pre- processed business specifications obtained at step 304a, using one or more constraints. The one or more constraints defines the conditions or criteria to be satisfied while identifying one or more optimal cloud services from the plurality of cloud services.

Exemplary prompts for identifying/retrieving the one or more optimal cloud services from the plurality of cloud services is as follows: 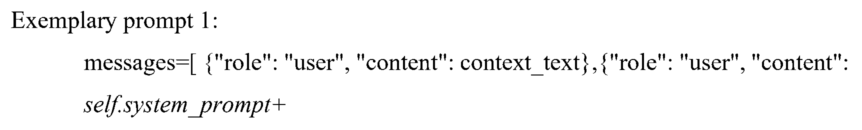 "\nFor the above query reply with just a list of the required services. Do not write any more text. Do not provide any explanation. Do not write any prefix sentences. Do not provide numbering of the services.Just write the service names one after the other seperated by newline only, not comma etc. I have also a list of questions and answers, that will provide you extra information about the query. They are: *"+qa+ "*The services you predict, should be always from the valid AWS services list given below. Do not predict a service that is not in the valid AWS services list. And the text you predict should be ditto from the valid AWS services list. Do not change a word, or do not shorten the text of any service. The list is:\n "+"\n".join(awslist)}]
NOTE: variable 'qa' - there is a list of questions also about the requirements that the user may choose to answer to provide more information. That list of question answer pairs is the variable 'qa'. Variable *'self.system*_*prompt'* is the text input from user.
Exemplary prompt 2: This prompt is for the connections between optimal cloud services:

```
          messages=[{"role":"user","content":context_text}, {"role": "user",
     "content" :self.system_prompt+
```

"\nFor the above query the cloud services required to design the application, are as below:\n"+str*(retval*)+"\n Now suggest suitable connections between these cloud services which would indicate the data flow between them. The connections should include many to one and one to many connections. It is absolute must that the starting point of the graph is always and always the 'User'. The resulting network should serve the purpose of the application in the query above. Do not write any explanations or descriptions. Just list the connections as pairs of services. Do not write any extra text. Let each pair be separated by a '-'. Do not provide any numbering of the services. Just write each pair in a new line."}]
NOTE: variable *'retval*' is the list of services predicted by the exemplary prompt 1

Lastly at step 304c, the prompt created at step 304b is passed to the one or more Large Language Model (LLMs) to identify one or more optimal cloud services from the plurality of cloud services.

At step 306 of the method 300, the one or more hardware processors 104 of the system 100 are configured to extract one or more cloud service specific parameters for each of the one or more optimal cloud services, in terms of one or more service metrics and one or more service categories, using a data extraction technique. The data extraction technique may employ natural language processing techniques or LLMs to extract the one or more cloud service specific parameters for each of the one or more optimal cloud services, in terms of the one or more service metrics and the one or more service categories.

In accordance with the present disclosure, the one or more service metrics are a performance service metric, and a deployment cost service metric, and the one or more service categories are a compute category, a storage category, and a network category.

The one or more service specific parameters associated with the performance service metric under the compute category include but are not limited to: one or more service resource configurations, number of service instances, and one or more application resource requirements. The one or more service resource configurations are the configurations of one or more resources which the cloud has, for example, memory (GBs), number of cores (VCPU), and so on. The number of service instances is a total number of cloud service instances, and it is an integer number. The one or more application resource requirements are the requirements of the resources like memory or cores required by a task in an application.

The one or more service specific parameters associated with the deployment cost service metric under the compute category include but are not limited to: a service instance type, an instance usage duration, an instance workload, and number of service instances. The service instance type is a name of the cloud service instance as per the CSP. The instance usage duration is the time duration (for example, in hours) for which a cloud service instance was active. The instance workload is the number of users/requests handled by the instance.

The one or more service specific parameters associated with the performance service metric under the storage category include but are not limited to a data size, a type of operation (read/write), a provisioned service instance type, and number of provisioned instances. The data size is the size of the data for example in GBs. The provisioned service instance type is the name of the cloud service instance as defined by the CSP.

The one or more service specific parameters associated with the deployment cost service metric under the storage category include but are not limited to: a storage size, number of read/write operations, an operation type, the provisioned service instance type, number of provisioned service instances, the instance usage duration, and a provisioned storage size. The storage size is the size of the data being stored in the storage service, for example in GBs. The number of read/write operations defines the number of reads or writes on the storage service. The provisioned storage size is the amount or size of data allocated in the storage service.

The one or more service specific parameters associated with the performance service metric under the network category include but are not limited to: a source and destination region, a data size, and a network bandwidth. The source and destination regions are the geography in which the cloud service is hosted. The network bandwidth is the internet bandwidth may be measured in GB/s.

The one or more service specific parameters associated with the deployment cost service metric under the network category include but are not limited to the source and destination region, the data size, a network usage duration, number of connections, and number of public addresses. The network usage duration is the time duration for which network is being active. The number of connections indicates the number of users connected to the application. The number of public addresses indicates the number of public IP addresses required for the application.

At step 308 of the method 300, the one or more hardware processors 104 of the system 100 are configured to determine a deployment cost and one or more performance metrics of each of the one or more optimal cloud services for the input cloud application, based on the one or more service specific parameters extracted at step 306 of the method 300, using one or more deployment cost models and one or more performance models, respectively.

In accordance with the present disclosure, the deployment cost is the cost of the input cloud application against each of the one or more optimal cloud services before the deployment (pre-deployment) on the cloud. The one or more performance metrics define the performance of input cloud application against each of the one or more optimal cloud services before the deployment (pre-deployment) on the cloud. In an embodiment, the one or more performance metrics include but are not limited to latency and throughput.

The deployment cost and the one or more performance metrics are determined using the one or more deployment cost models and the one or more performance models which together forms the modelling-based approach of the present disclosure. Thus, the methods and systems of the present disclosure employs the modeling-based approach to estimate the performance and cost of the proposed architecture. The performance and cost of cloud deployment can be broadly categorized into three high-level groups: the compute category, the storage category, and the network category as explained at step 306 of the method 300.

More specifically, the deployment cost is determined by the one or more deployment cost models through the one or more service specific parameters associated with the deployment cost service metric under the compute category, the storage category, and the network category. Similarly, the one or more performance metrics are determined by the one or more performance models through the one or more service specific parameters associated with the performance service metric under the compute category, the storage category, and the network category.

The one or more performance models are obtained by training regression models such as gradient boosting model, linear regression model, Logarithmic regression model, and so on, using performance benchmarking data or any suitable training datasets. The one or more deployment cost models are implemented using analytical cost models such as parametric models, mathematical models, and so on using historical data obtained from cloud vendors provided cost calculators, cloud service documentation, billing data, and so on.

Hence, the present disclosure involves constructing models for each individual service metric (the deployment cost service metric and the performance service metric) within the cloud architecture, while also accounting for inter-service interactions. The performance model repository of the end-to-end framework of the present disclosure houses these models constructed from diverse sources, including benchmarking data aggregated from various platforms and preexisting models derived from prior research. To further enhance the accuracy of these models, characterization experiments are conducted within a controlled laboratory environment using varied workload sizes.

The cost of each service metric is parameterized according to specifications outlined in official cloud pricing documentation such as AWS pricing documentation. These parameters are validated using the AWS price calculator. From this foundation, the analytical cost models for each service metric. Notably, pricing per unit, or cost rates, is region-specific and is dynamically retrieved using the data sources for example, through AWS Price List application programming interfaces (APIs).

Table 1 presents a comprehensive overview of the most frequently used AWS cloud services, associated model parameters, and employed model types. Each service metric is characterized by a unique set of parameters that determine both its performance and cost implications for a given workload. This section details the various models developed for different service categories.

**Table 1**

| Category | Source cloud service | Metric | Parameters | Data source and tools | Model type |
|---|---|---|---|---|---|
| Compute | Lambda | Latency | Memory configuration, | Historic CloudWatch logs for | |
| | | | Function name, Memory required | Function name, Memory consumed, Memory configured, Execution duration | Gradient boosting regression model |
| | | Cost | Memory configuration, Execution duration, Number of invocations | AWS Pricing documentation, AWS Price calculator, Billing information | Analytical cost model |
| | EC2 (EKS cluster nodes) | Latency | Instance type, No. of instances, Application specifications, microservice resource requirements | LLM Inference Performance benchmarks | CAR LLM Performance models |
| | | | | Application load test performance results | Regression models for microservices |
| | | Cost | Instance type, No. of instances, duration, EBS size, EBS type | AWS Pricing documentation, AWS Price calculator, Billing information | Analytical cost model |
| | EKS | Cost | EKS service duration | AWS Pricing documentation, AWS Price calculator, Billing information | Analytical cost model |
| Storage | S3 | Latency (with Lambda) | Request file size, Memory of lambda, Operation (read/write) | Cloudwatch logs - Experiments varying File size, Memory configuration, Operation | Gradient boosting regressor model |
| | | Latency (with EC2) | Request file size, Instance type, Operation (read/write) | Open source data for throughput and EC2-S3 Bandwidth | Regression model |
| | | Cost | Storage size, No. of operations, Operation type (read/write), | AWS Pricing documentation, AWS Price calculator, Billing information | Analytical cost model |
| | DynamoDB | Latency (with Lambda) | Request size, Memory of Lambda, | Bandwidth benchmarking experiments varying the input parameters | Gradient boosting regressor |
| | | | No. of threads, No. of tables, Chunk size | | |
| | | Latency (with EC2) | Request size, Cores, No. of threads, No. of tables, Chunk size | Bandwidth benchmarking experiments varying the input parameters | Gradient boosting regressor |
| | | Cost | Storage size, No. of operations, Operation type (read/write) | AWS Pricing documentation, AWS Price calculator, Billing information | Analytical cost model |
| | Aurora | Latency | Instance type, No. of instances | Benchmarks, AWS documentation | Regression model |
| | | Cost | Instance type, No. of instances, Duration, Provisioned storage size | AWS Pricing documentation, Price calculator, Billing information | Analytical cost model |
| | ElastiCache | Latency | Instance type, No. of instances | Experiments varying instance types | Regression model |
| | | Cost | Instance type, No. of instances, Duration | AWS Pricing documentation, AWS Price calculator, Billing information | Analytical cost model |
| Network | Data transfer | Latency | Source & destination region/zone, data size, network bandwidth | AWS Global network data about RTT between pairs of regions/zones | Linear regression model |
| | | Cost | Source & destination region, data size | AWS Pricing documentation, AWS Price calculator, Billing information | Analytical cost model |
| | VPC | Cost | No. of public IPV4 address, Duration of use/idle time | | |
| | Loadbalancer | Cost | Duration, No. of connections, Processed bytes | | |
| Miscella neous | MQ | Cost | Instance type, No. of brokers, Duration, Storage size | | |

The one more deployment cost models, and the one or more performance models under the storage category: These are the models designed for storage and databases include object storage like AWS S3, NoSQL databases such as DynamoDB, and relational database systems (RDS). These services can be further categorized into serverless and provisioned offerings. Serverless storage options, such as S3, employ a pay-per-use model based on data storage volume and the number of operations performed. In contrast, provisioned storage services like RDS require an upfront selection of compute and storage capacity, resulting in charges regardless of actual usage. These models investigate the performance and cost characteristics of AWS S3, DynamoDB, and RDS. The models were developed for these services, accounting for interactions with other services. Specifically, interdependencies between storage services and compute services (e.g., serverfull EC2, serverless AWS Lambda functions) can be explored, as well as interactions among the storage services.

The service interaction latency is configuration dependent. Specifically, network bandwidth and thus transfer rates (e.g., S3 to Lambda) are impacted by compute resources, such as Lambda memory allocation. These effects can be quantified by conducting experiments varying relevant parameters (Lambda memory, file size) to construct models of storage service transfer performance. In an embodiment, open-source data is used for modeling S3-EC2 interactions. Similarly, the DynamoDB configurations (table/chunk sizes) are varied under different EC2/Lambda settings to build corresponding performance models.

As explained, the one or more deployment cost models in the present disclosure are constructed for individual services using the service-specific parameters. Serverless storage services, such as S3, incur costs based on the storage volume and number of operations performed. Provisioned storage, conversely, is charged based on instance type, usage duration, block storage, and provisioned throughput. Message broker services like managed message broker service (AWS MQ) are billed for instance type, number of nodes, duration, and storage consumed.

The one or more deployment cost models and the one or more performance models under the compute category: Cloud computing offers a diverse range of compute services, including virtual machines (VMs), serverless functions, cluster-based caching, and analytics platforms. A comparative analysis of serverless platforms, such as AWS Lambda, alongside Infrastructure-as-a-Service (IaaS) offerings like EC2 virtual machines and Kubernetes clusters are considered, along with database instances as a crucial component of many cloud deployments.

The performance and cost of the cloud compute service are fundamentally determined by its capacity characteristics, such as the number of processing cores, allocated memory, and the number of provisioned instances, as well as the duration of compute activity. Lambda, a serverless platform, exhibits a pay-per-use billing model, automatically scales to zero when idle, and offloads resource provisioning to the cloud provider. In contrast, EC2 and Elastic Kubernetes Service (EKS) require explicit autoscaling configurations with defined minimum and maximum node counts, and may incur charges for the duration they are active, regardless of workload. Crucially, Lambda's performance is primarily influenced by its memory allocation; central processing unit (CPU), core count, and network performance are implicitly scaled with the chosen memory configuration. To model Lambda's latency behavior for different applications, historical CloudWatch logs are leveraged. Specifically, detailed execution information, including function name, configured and utilized memory, and execution duration, are explored using CloudWatch queries. This data serves as the basis for training the regression models, which predicts the latency given specified function resource requirements. Lambda cost is a function of invocation count, memory allocation, and execution duration.

The performance of IaaS-based VMs and hardware instances is highly dependent on the workload and deployed application. For applications migrating from on-premise environments to the cloud, workload characterization techniques to be employed to project their performance on cloud infrastructure. For applications built from the ground up, an application similarity-based approach may be utilized to estimate performance. This approach identifies micro-architecture-independent application characteristics and assesses similarity to previously profiled benchmarks. In an embodiment, these models are built using benchmarking data gathered from various sources and application domains.

EC2 provides a range of instance types tailored for specific purposes, such as compute-optimized, memory-optimized, and network-optimized. The EC2 cost model within the end-to-end framework predicts costs based on instance type and associated attributes including core count, memory, storage, network capacity, duration of operation, and geographic location. The cost model for Lambda is parameterized by the number of invocations, memory configuration, and execution duration. Elastic Kubernetes Service (EKS) incurs charges based on the duration of cluster operation.

The one or more deployment cost models and the one or more performance models under the network category: The performance and cost of an application are significantly influenced by factors such as the volume of data transferred between services, the geographical locations of source and destination regions, available network bandwidth, and the specific cloud services employed. End-users, potentially distributed globally, exhibit diverse internet connectivity speeds. Consequently, network performance between the user and the cloud is also contingent on internet speed, proximity to the cloud provider's network, and the type of network connection (e.g., direct interconnect, Virtual Private Cloud (VPC) connections).

The CSPs maintain geographically dispersed data centers, organized into regions and availability zones within regions. Cloud services can be deployed in any of these regions or zones. For high availability and fault tolerance, applications are typically hosted across multiple regions and zones. Data transfer between cloud services within the same cloud provider leverages the provider's global network, ensuring that traffic remains within the confines of that network. However, traffic between the user and a cloud service necessarily traverses the public internet, going out of the private network of the CSPs.

Inter-region and inter-zone latency within the cloud provider's network is continuously monitored through probes strategically positioned across different locations. The AWS Network Performance Manager may be used to acquire historical and real-time round-trip time (RTT) data for communication between regions and zones within the AWS global network. The RTT is primarily determined by the geographical distance and the available network bandwidth between the source and destination. The latency may be accounted within the same region. Furthermore, to incorporate the impact of inter-region data transfers, the RTT measurements are to be integrated into the network model.

Data transfer costs are determined by the amount of data transferred and the source and destination regions involved. The VPC resources are billed based on the duration of active or idle IP addresses. Load balancer costs are a function of duration, the number of connections, and the volume of data processed.

At step 310 of the method 300, the one or more hardware processors 104 of the system 100 are configured to optimize a cloud service configuration associated with each optimal cloud service of the one or more optimal cloud services, based on the deployment cost and the one or more performance metrics, to determine an optimized cloud architecture for the input cloud application.

Based on the deployment cost and the one or more performance metrics of the input cloud application, the cloud service configuration associated with each optimal cloud service of the one or more optimal cloud services are further optimized. More specifically, what-if and if- what analysis is performed to analyze the impact on the performance and the deployment cost by replacing the optimal cloud services or changing the cloud service configurations. After the analysis, the one or more optimal cloud services are optimized such that the deployment cost is decreased, and the performance is increased to design the optimized cloud architecture for the input cloud application having the Pareto-optimal solutions across the diverse deployment cloud service configurations.

The rapid evolution of cloud infrastructure and services presents a significant challenge to maintaining optimal application deployments. Cloud vendors continually introduce new services and features, while the cost and performance characteristics of existing services fluctuate substantially over time, even for fixed configurations. Consequently, the cloud architecture developed for specific workloads and user specifications in the past may no longer be optimal.

At step 312 of the method 300, the one or more hardware processors 104 of the system 100 are configured to receive a current deployed cloud architecture of the input cloud application after deployment. In an embodiment, the current deployed cloud architecture of the input cloud application is the existing cloud architecture currently deployed for the input cloud application on the cloud. In another embodiment, the current deployed cloud architecture of the input cloud application is the optimized cloud architecture obtained at step 310 of the method 300 after the deployment on the cloud.

At step 314 of the method 300, the one or more hardware processors 104 of the system 100 are configured to retrieve one or more cloud service configurations and one or more cloud services present in the current deployed cloud architecture. More specifically, the current deployed cloud architecture is converted into a structured format. This step involved identifying the one or more cloud service configurations and the one or more cloud services present in the current deployed cloud architecture. Further, various objects such as cloud service logos and icons are also identified and grouped as multiple services within a single geographic region or Virtual Private Cloud (VPC), as well as non-standard diagram elements, such as users and mobile devices.

At step 316 of the method 300, the one or more hardware processors 104 of the system 100 are configured to generate an adjacency matrix of the input cloud application by converting the current deployed cloud architecture. The adjacency matrix includes the one or more cloud service configurations, the one or more cloud services and the one or more objects associated with each of the one or more cloud service configurations and the one or more cloud services that are identified at step 314 of the method 300. More specifically, rows and columns correspond to the cloud services of the configurations, and other identified objects. A value of '1' indicates a connection or relationship between the two cloud services, cloud configurations, or objects represented by the corresponding row and column.

At step 318 of the method 300, the one or more hardware processors 104 of the system 100 are configured to identify one or more bottleneck cloud service configurations out of the one or more cloud service configurations and one or more bottleneck cloud services out of the one or more cloud services having the one or more bottlenecks present in the current deployed cloud architecture, based on the adjacency matrix through a Retrieval-Augmented Generation (RAG) based approach.

The CSPs provide extensive documentation detailing newly launched services. These documents often include information regarding efficient architectural patterns and optimal service configurations. To leverage this knowledge, the RAG based approach is implemented which constructs embeddings for the content within the documentation of multiple cloud services. These embeddings, representing optimal architectural patterns, are then stored in a vector database. Subsequently, based on existing workloads and performance Service Level Agreements (SLAs), a query that accurately represents the current state of deployment is formulated. This query is used to retrieve optimal cloud services from the vector database via a similarity-based comparison of query embeddings and cloud service embeddings.

Based on the recommended cloud service identified, the adjacency matrix representation of the existing architecture is modified. This modification involves adding, deleting, or updating matrix entries to reflect the suggested changes. As a result, a new cloud architecture is presented using the updated adjacency matrix.

In an embodiment, generating the adjacency matrix, identifying the bottleneck cloud services and configuration, and modifying the existing cloud architecture may be implemented using LLMs such as ChatGPT-4 and Gemini advanced as both are proficient at image recognition and reasoning tasks. A tool implementing the aforementioned framework has been developed, providing an intuitive interface for users to build, visualize, and edit cloud architectures. Through this interface, users can input specifications, such as user requirements, Service Level Agreements (SLAs), or existing deployment architectures (for bottleneck detection). The tool then displays the resulting architecture on a visual canvas. Furthermore, users can directly edit the architecture and conduct both what-if and if-what analyses. The tool facilitates modification of the architecture by enabling the replacement of existing cloud services or the adjustment of their configurations, allowing users to observe the consequent impact on the performance and deployment cost metrics.

The methods and systems of the present disclosure leverages performance and cost modeling to generate Pareto-optimal solutions across diverse deployment configurations. This research leverages the AI to navigate the complexity of selecting and configuring optimal cloud services for given workloads. The efficacy was validated using real-world applications deployed on Amazon Web Services (AWS) cloud platform. The evaluation of framework shows that the performance and cost of the recommended architectures are predicted with less than 10% and 6% errors respectively. Additionally, the end-to-end framework of the present disclosure successfully finds bottleneck in the existing architecture and its recommendations result in avoiding Service Level Agreement (SLA) violations. This work significantly improves the accuracy of pre-deployment as well as post-deployment cost and performance analysis, enabling informed decision-making in cloud application deployments.

The disclosed AI-based approaches are capable of automatically analyzing service documentation to extract and identify architectural patterns and propose optimal configurations. Further, the methods and systems of the present disclosure leverage these repositories to analyze and assess different scenarios using editable architecture would be highly advantageous. Therefore, a comprehensive solution capable of accurately estimating the cost and performance of both individual cloud services and complete architectures is a valuable contribution to the field. The AI-based approaches provide a promising solution by enabling the automated identification of bottlenecks in existing cloud architectures.

### Example Scenario:

Use cases and experimental setup: To evaluate the efficacy and accuracy of the end-to-end framework of the present disclosure with the modelling-based approach, two representative use cases: a retail store application and an Internet of Things (IoT) application are presented. Respective reference architectures were initially constructed for both applications, for the retail and IoT applications. Subsequently, both the applications were deployed on the AWS cloud, adhering to these established architectures.

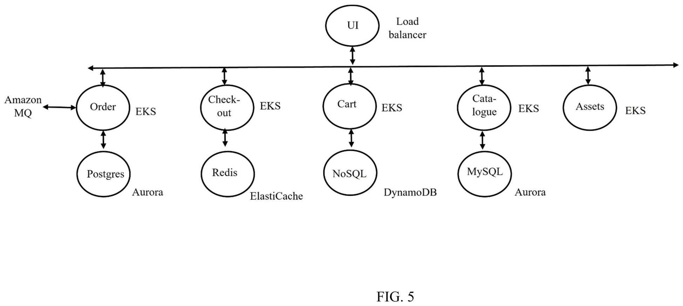

FIG. 5 illustrates an exemplary deployment architecture of a retail application use case in AWS cloud. As shown in FIG. 5, the retail application's distributed component architecture is comprised of microservices responsible for functionalities such as product catalog management, shopping cart operations, and checkout processing. Furthermore, it utilizes persistent data backends, including MySQL, DynamoDB, and Redis. Another use case is the Internet of Things (IoT) application focused on the post-processing of video captured by on-premise CCTV cameras. The video frames were transmitted to the cloud via a pipeline leveraging AWS Greengrass, AWS IoT Core, Amazon Kinesis, and Data Firehose for interface and data streaming. Subsequently, these frames are stored in an Amazon S3 bucket. A Deep Learning (DL) model, deployed on Amazon EC2, retrieves the frames from S3, performs object tracking, and stores the processed results in a separate S3 bucket. Specifically, the DL model identifies and tracks objects across frames by generating bounding boxes and assigning unique color codes to distinguish between different tracked objects. Finally, a dashboard application, also hosted on Amazon EC2, visualizes these results for the user. This architecture system is then provided as input for the bottleneck detection and architecture recommendation. The recommended architecture is rigorously evaluated and compared against the original design to assess its performance.

Evaluation: The end-to-end framework of the present disclosure is evaluated across three key areas. First, the accuracy of the performance and deployment cost models were assessed. Second, the impact of the recommendations on the deployment cost of application deployment was analyzed. Finally, the effectiveness of the end-to-end framework of the present disclosure was investigated by identifying bottlenecks within an application architecture and its ability to suggest optimal services and configurations.

Deployment cost and performance models evaluation: The predictive accuracy of the performance and deployment cost models of the present disclosure were assessed by evaluating them against the retail application use case. JMeter was utilized to generate a controlled, artificial workload representative of typical user activity. Specifically, a range of application workflows were exercised, varying the number of concurrent users, and measure the corresponding application response times. These measurements served as ground truth for the model validation.

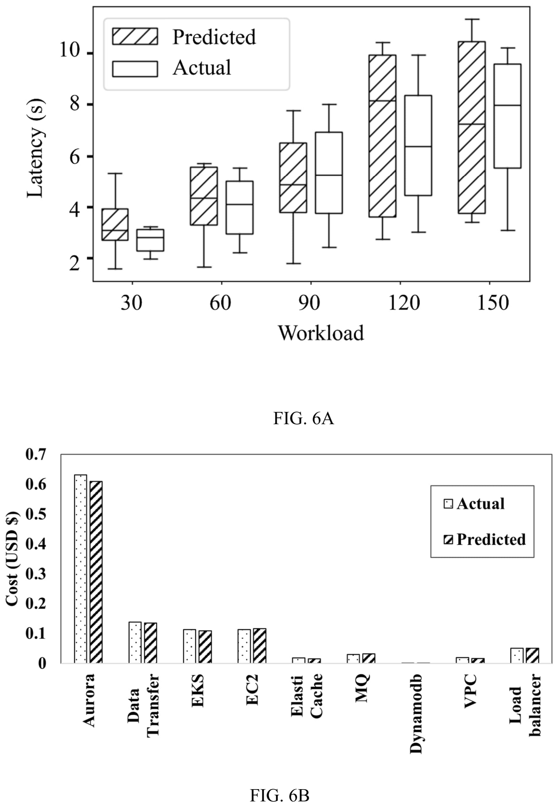

Performance models evaluation: The efficacy of the performance models was evaluated by comparing the predicted end-to-end latency with the observed latencies for four distinct workflows of a retail application concurrent users. The observed latency encompasses the request transmission time across the network from the user's system to the AWS cloud, the processing time within the AWS EKS compute environment, and the data read/write times associated with interactions with storage services using deployment configurations. The predicted latency by the present disclosure was derived by aggregating the outputs of the constituent network, compute, storage, and database models, as previously described. The latency measurements were generated across a spectrum of concurrency levels. FIG. 6A is a graph showing a comparison of an actual and a predicted latency for an exemplary application workflow of a retail application for different workloads (number of concurrent users), in accordance with some embodiments of the present disclosure. As shown in FIG. 6A, the analysis demonstrates that the end-to-end latency prediction error remains below 10% for the exemplary application workflow, thereby indicating the high fidelity of the proposed performance models.

Deployment cost models evaluation: The accuracy of the deployment cost models was evaluated by comparing predicted expenditures with actual deployment costs extracted from the AWS Cost Management console. Specifically, the actual deployment cost was measured, as reported by AWS billing, for a one-hour execution of a workload comprising 500 concurrent transactions per hour. Concurrently, the predicted deployment costs were computed for the same workload using the deployment cost models.

FIG. 6B is a graph showing an actual and predicted hourly cost for cloud services used by retail application for a workload of 500 transactions, in accordance with some embodiments of the present disclosure. As shown in FIG. 6B, the comparative analysis of costs is presented for various cloud services, including AWS EKS, AWS Aurora, and AWS Load Balancer, incurred while running all microservices of the retail application for a single hour at a processing rate of 500 transactions per hour. The results demonstrate that the deployment cost models effectively predict the cost estimates, achieving an error margin of less than 6% across all the assessed services.

Impact of recommendation: The end-to-end framework of the present disclosure is designed to recommend two primary types of modifications to cloud deployment architecture: (a) adjustments to the configuration of existing cloud services and (b) the substitution of one cloud service with an alternative. To evaluate the end-to-end framework of the present disclosure, a synthetic workload representative of a retail application's demand over a single quarter, was considered. This workload models the dynamic nature of user concurrency throughout a day, across weekdays and weekends, and during peak festival periods. The simulated concurrency ranges from a minimum of 50 concurrent users to a peak of 6,000. In the experimental setup, the cloud service and its configuration within each case are held constant throughout the entire quarter, regardless of fluctuations in user concurrency. The primary objective was to minimize the overall deployment cost, while rigorously ensuring that performance Service Level Agreements (SLAs) are not violated in each experimental evaluation.

Table 2 details the deployment cost estimations, derived using the deployment cost models of the present disclosure, for four distinct deployment scenarios of the retail application. This application, architected entirely as a microservices-based system, is evaluated over a single quarter. Each scenario represents a unique mapping of microservices to underlying cloud services. Within each scenario, specific cases reflecting varying cloud service configurations were presented.

**Table 2**

| Scenario | Case | Catalog Mysql instance type | Assets | Cart | Check out MS Elastic ache instance type | Orders MS Postgres instance type | Orders MS MQ Instance type | EKS instance type | EK S no. of no des | Quarterly cost (USD) Transactions /hour |
|---|---|---|---|---|---|---|---|---|---|---|
| | A | t3.me dium | EK S | EKS | t3.mic ro | t3.me dium | t2.m icro | m5.1 arge | 1 | 1318.3224 |
| Scen ario 1 | B | **t3.lar** ge | EK S | EKS | t3.mic ro | t3.me dium | t2.m icro | m5.1 arge | 1 | 1431.1544 |
| | C | **r5.lar** ge | EK S | EKS | t3.mic ro | t3.me dium | t2.m icro | m5.1 arge | 1 | 1608.4684 |
| Scen ario 2 | A | t3.me dium | EK S | Lam bda | t3.mic ro | t3.me dium | t2.m icro | m5.1 arge | 1 | 1248.0693 |
| | B | t3.me dium | EK S | EKS | t3.mic ro | t3.me dium | t2.m icro | m5.1 arge | 1 | 1318.3224 |
| Scen ario 3 | A | t3.me dium | EK S | EKS | t3.mic ro | t3.me dium | t2.m icro | m5.1 arge | 1 | 1318.3224 |
| | B | t3.me dium | EK S | EKS | t2.mic ro | t3.me dium | t2.m icro | m5.1 arge | 1 | 1318.3224 |
| | C | t3.me dium | EK S | EKS | t3.sma ll | t3.me dium | t2.m icro | m5.1 arge | 1 | 1339.5894 |
| | D | t3.me dium | EK S | EKS | t2.sma ll | t3.me dium | t2.m icro | m5.1 arge | 1 | 1339.5894 |
| Scen ario 4 | A | t3.me dium | EK S | EKS | t3.mic ro | t3.me dium | t2.m icro | m5.1 arge | 1 | 1318.3224 |
| | B | t3.me dium | S3 | EKS | t3.mic ro | t3.me dium | t2.m icro | m5.1 arge | 1 | 1248.5542 |

Cloud Service Configuration Optimization in Scenario 1: The efficacy of the end-to-end framework of the present disclosure was demonstrated by showcasing its ability to identify optimal cloud service configurations within a given architecture. Specifically, optimizing the database tier was focused on the retail application by evaluating different AWS Aurora instance types. The performance and deployment cost implications of deploying MySQL were analyzed on three distinct AWS Aurora instance types: t3.medium, t3.large, and r5.large, each interconnected with catalog microservice with maximum supported concurrency 500, 1000, and 2000 respectively. The end-to-end framework of the present disclosure employs database performance and cost models to predict system behavior under varying concurrency levels.

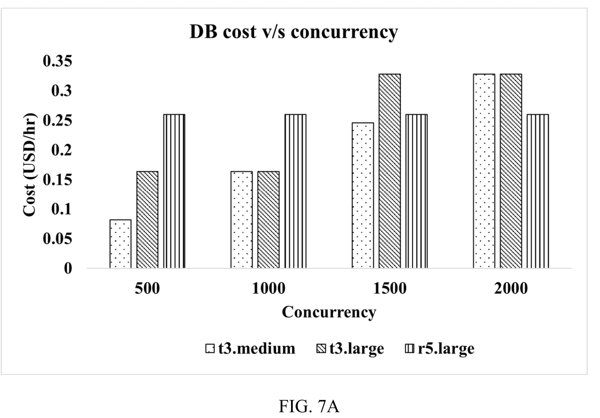

FIG. 7A shows a comparison of the cost of database instances with varying concurrency, in accordance with some embodiments of the present disclosure. At lower concurrency levels (up to 500), smaller instances such as the t3.medium offer the most cost-effective solution. However, to support higher concurrency, multiple instances of smaller types are required. For example, achieving a sustained concurrency of 2000 requires four t3.medium instances, two t3.large instances, or a single r5.large instance. While the r5.large instance demonstrates a lower per-unit cost at a concurrency of 2000, this advantage doesn't translate into the lowest cost at lower concurrencies.

When considering the real-world workload characteristics of a retail application, the hourly concurrency typically remains below 2000 for the majority of the time. The analysis demonstrates that, despite the higher capacity of the r5.large, its quarterly operational cost exceeds that of utilizing multiple t3.medium instances. This illustrates that optimizing solely for peak concurrency can lead to suboptimal solutions in real world applications, highlighting the benefits of the performance aware deployment cost model.

Framework recommendation: Under consistent concurrency, provisioning databases with higher configurations typically reduces costs without compromising performance. Conversely, the end-to-end framework of the present disclosure reveals that workloads with fluctuating concurrency patterns may achieve lower costs through alternative configurations, such as using smaller instance types, depending on the specific concurrency profile.

Cloud Service Configuration Adjustment in Scenario 2: The impact of varying instance types on the performance of an AWS ElastiCache cloud service interconnected with an EKS instance serving a microservice was examined. Specifically, the limitations imposed by instance type were examined with regards to maximum concurrent connection capacity. It was noted that t2.micro and t3.micro instances are limited to a maximum of 1000 concurrent connections, whereas t2.small and t3.small instances can support up to 6500 connections. When the application workload surpasses the connection limit of a given instance type, horizontal scaling (i.e., the addition of more instances) is required to accommodate the increased load. For instance, supporting 6000 concurrent connections would necessitate six t2.micro instances. In contrast, a single t2.small instance is capable of handling the same load. These differences in resource requirements and their implications for horizontal scaling are carefully accounted for when estimating the end-to-end performance and cost of the entire workflow.

Framework recommendation: the end-to-end framework of the present disclosure facilitates the identification of potential performance and cost implications through model-based estimations. Leveraging what-if and if-what analyses, the cost implications of elasticache instance types for the quarterly workload were demonstrated.

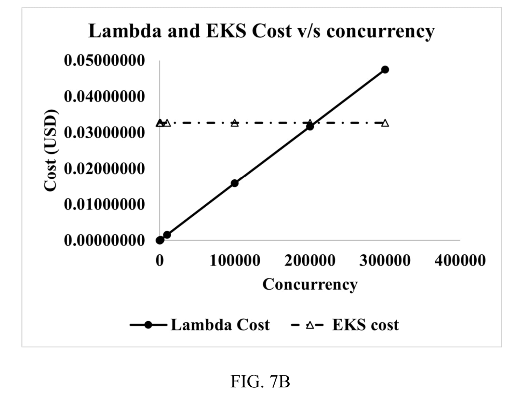

Cloud service replacement in Scenario 3: The capability of the end-to-end framework of the present disclosure was evaluated to recommend optimal cloud services within a given architecture. Specifically, the deployment of cart microservice was analyzed on both EKS and AWS Lambda. The latency experienced within the EKS cluster increases proportionally with concurrent user load. In contrast, Lambda exhibits latency independence from concurrency due to the per-request instantiation of new Lambda function instances. Furthermore, the analysis reveals that Lambda offers a more cost-effective solution at lower concurrency levels, whereas EKS becomes more economical under very high concurrency demands. FIG. 7B shows the cost incurred by catalog microservice for different workloads, when deployed in EKS node and Lambda functions, in accordance with some embodiments of the present disclosure. These observations are corroborated by the quarterly cost data for the entire application.

Framework Recommendation: Lambda is particularly well suited for processing intermittent, low-volume workloads. IaaS using EKS is more advantageous for handling sustained, high volume workloads that persist for extended periods.

Cloud service replacement in Scenario 4: The Assets microservice is a server responsible for delivering product image files within the retail application. The quarterly hosting costs for this service were evaluated, comparing EKS node storage with S3 object storage. Utilizing S3 demonstrates a lower cost profile than employing instance node storage. This cost advantage arises from S3's pay-as-you-go model for storage consumption, coupled with its inherent high availability guarantees.

Framework Recommendation: The end-to-end framework of the present disclosure implements the aforementioned architectural pattern, advocating for the use of S3 for hosting static assets, which offers a more cost-effective solution compared to utilizing EKS cluster nodes.

Performance bottleneck detection: This study pinpoints performance bottlenecks and cost-inefficient services within a cloud-deployed application. The end-to-end framework of the present disclosure takes as input the existing architecture, historical workload data (since the application is already live), and critical Service Level Agreements (SLAs). It then identifies inefficient services and proposes either alternative cloud services or modifications to existing configurations. The performance and cost implications of these recommendations were evaluated using pre-built models. Based on this evaluation, it is observed that two latency SLA violations caused by EC2 instances and a Lambda cloud service in the initial architecture. The framework suggests replacing the EC2 instances with Lambda instances and also proposes a configuration change for the other Lambda instance, successfully eliminating the SLA violations. Furthermore, it was recommended to replace AWS S3 with S3 Glacier for cost reduction without impacting SLAs.

Table 3 shows analysis of SLA violations and framework-Driven architectural adjustments in IoT application use case.

**Table 3**

| SL A ID | Original Architecture Services | | | | Recommended Architecture Service | | | | Improvem ent Metric |
|---|---|---|---|---|---|---|---|---|---|
| | AWS Servi ce | Laten cy (s) | Cost (US D) | SLA violati on (metri c) | AWS Servi ce | Laten cy (s) | Cost (US D) | SLA violati on | |
| | EC2 | 5.8 | 1.7 | No | EC2 | 5.8 | 1.7 | No | |
| 2 | EC2 | 56.4 | 1.7 | Yes (latenc y) | Lamb da | 19.4 | 3.2 | No | latency |
| 3 | Lamb da (10 GB) | 19.4 | 3.3 | Yes (latency) | Lamb da (9 GB) | 22.5 | 3.2 | No | latency |
| 4 | S3 | 1.1 | 0.49 | No | S3 Glacier | 60 | 0.17 | No | cost |

Table 4 shows analysis of SLA violations and framework-driven architectural adjustments in retail application use case.

**Table 4**

| SL A ID | Original Architecture Services | | | | Recommended Architecture Services | | | | Improvement Metric |
|---|---|---|---|---|---|---|---|---|---|
| | AWS Service | Latency (s) | Cost (US D) | SLA violation (metr ic) | AWS Service | Latency (s) | Cost (US D) | SLA violation | |
| 1 | Dynam oDB | 5.1 | 119. 3 | Yes | DAX+Dya noDB | 0.01 | 238 | No | latency |
| 2 | ElastiC ache (t3.small) | 0.06 | 0.03 4 | No | ElastiCache (t2.micro) | 0.07 | 0.01 | No | cost |

The written description describes the subject matter herein to enable any person skilled in the art to make and use the embodiments. The scope of the subject matter embodiments is defined by the claims and may include other modifications that occur to those skilled in the art. Such other modifications are intended to be within the scope of the claims if they have similar elements that do not differ from the literal language of the claims or if they include equivalent elements with insubstantial differences from the literal language of the claims.

The embodiments of present disclosure herein address unresolved problems of determining the optimized cloud architecture using the modelling-based approach such as the performance cost models and the deployment cost models. Thus, the performance and the cost of the cloud application is determined and enhanced with the cloud services before the deployment (pre-deployment) on the cloud.

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g., any kind of computer like a server or a personal computer, or the like, or any combination thereof. The device may also include means which could be e.g., hardware means like e.g., an application-specific integrated circuit (ASIC), a field-programmable gate array (FPGA), or a combination of hardware and software means, e.g., an ASIC and an FPGA, or at least one microprocessor and at least one memory with software processing components located therein. Thus, the means can include both hardware means, and software means. The method embodiments described herein could be implemented in hardware and software. The device may also include software means. Alternatively, the embodiments may be implemented on different hardware devices, e.g., using a plurality of CPUs.

The embodiments herein can comprise hardware and software elements. The embodiments that are implemented in software include but are not limited to, firmware, resident software, microcode, etc. The functions performed by various components described herein may be implemented in other components or combinations of other components. For the purposes of this description, a computer-usable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items or meant to be limited to only the listed item or items. It must also be noted that as used herein and in the appended claims, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

## Claims

1. A processor-implemented method (300), comprising:
receiving, via one or more input/output (I/O) interfaces, (i) one or more technical specifications, (ii) one or more service level agreements, (iii) one or more business specifications, and (iv) one or more user requirements, of an input cloud application for which an optimal cloud architecture is to be determined before deployment (302);
identifying, via one or more hardware processors, one or more optimal cloud services from a plurality of cloud services, based on the one or more technical specifications, the one or more user requirements, the one or more service level agreements, and the one or more business specifications, using one or more Large Language Model (LLMs) (304);
extracting, via the one or more hardware processors, one or more cloud service specific parameters for each of the one or more optimal cloud services, in terms of one or more service metrics and one or more service categories, using a data extraction technique (306);
determining, via the one or more hardware processors, a deployment cost and one or more performance metrics of each of the one or more optimal cloud services for the input cloud application, based on the one or more service specific parameters, using one or more deployment cost models and one or more performance models, respectively (308); and
optimizing, via the one or more hardware processors, a cloud service configuration associated with each optimal cloud service of the one or more optimal cloud services, based on the deployment cost and the one or more performance metrics, to determine an optimized cloud architecture for the input cloud application (310).

2. The processor-implemented method (300) as claimed in claim 1, further comprising:
receiving, via the one or more input/output (I/O) interfaces, a current deployed cloud architecture of the input cloud application after deployment (312);
retrieving, via the one or more hardware processors, one or more cloud service configurations and one or more cloud services present in the current deployed cloud architecture (314);
generating, via the one or more hardware processors, an adjacency matrix of the input cloud application by converting the current deployed cloud architecture, wherein the adjacency matrix comprises one or more cloud service configurations, one or more cloud services and one or more objects associated with each of the one or more cloud service configurations and the one or more cloud services (316); and
identifying, via the one or more hardware processors, one or more bottleneck cloud service configurations out of the one or more cloud service configurations and one or more bottleneck cloud services out of the one or more cloud services having the one or more bottlenecks present in the current deployed cloud architecture, based on the adjacency matrix through a Retrieval-Augmented Generation (RAG) based approach (318).

3. The processor-implemented method (300) as claimed in claim 1, wherein (i) each of the one or more optimal cloud services and (ii) each of the plurality of cloud services, comprises a cloud service configuration for one or more workload requirements, and wherein each cloud service configuration comprises one or more cloud service sub-configurations.

4. The processor-implemented method (300) as claimed in claim 1, wherein identifying the one or more optimal cloud services from the plurality of cloud services, based on the one or more technical specifications, the one or more user requirements, the one or more service level agreements, and the one or more business specifications, using the one or more Large Language Model (LLMs), comprises:
pre-processing the one or more technical specifications, the one or more user requirements, the one or more service level agreements, and the one or more business specifications, using one or more data pre-processing techniques, to obtain one or more pre-processed technical specifications, one or more pre-processed user requirements, one or more pre-processed service level agreements, and one or more pre-processed business specifications, respectively (304a);
create one or more prompts for the one or more pre-processed technical specifications, the one or more pre-processed user requirements, the one or more pre-processed service level agreements, and the one or more pre-processed business specifications, using one or more constraints (304b); and
passing the prompt to the one or more Large Language Model (LLMs) to identify one or more optimal cloud services from the plurality of cloud services (304c).

5. The processor-implemented method (300) as claimed in claim 1, wherein the one or more service metrics are a performance service metric, and a deployment cost service metric, and the one or more service categories are a compute category, a storage category, and a network category, and wherein:
(i) the one or more service specific parameters associated with the performance service metric under the compute category are: one or more service resource configurations, number of service instances, and one or more application resource requirements,
(ii) the one or more service specific parameters associated with the deployment cost service metric under the compute category are: a service instance type, an instance usage duration, an instance workload, and number of service instances,
(iii) the one or more service specific parameters associated with the performance service metric under the storage category are: a data size, a type of operation (read/write), a provisioned service instance type, and number of provisioned instances,
(iv) the one or more service specific parameters associated with the deployment cost service metric under the storage category are: a storage size, number of read/write operations, an operation type, the provisioned service instance type, number of provisioned service instances, the instance usage duration, and a provisioned storage size,
(v) the one or more service specific parameters associated with the performance service metric under the network category are: a source and destination region, a data size, and a network bandwidth, and
(vi) the one or more service specific parameters associated with the deployment cost service metric under the network category are: the source and destination region, the data size, a network usage duration, number of connections, and number of public addresses.

6. The processor-implemented method (300) as claimed in claim 1, wherein:
the performance models are obtained by training a regression model using performance benchmarking data, and
the deployment cost models are implemented using an analytical cost model.

7. A system (100), comprising:
a memory (102) storing instructions;
one or more input/output (I/O) interfaces (106); and
one or more hardware processors (104) coupled to the memory (102) via the one or more I/O interfaces (106), wherein the one or more hardware processors (104) are configured by the instructions to:
receive (i) one or more technical specifications, (ii) one or more service level agreements, (iii) one or more business specifications, and (iv) one or more user requirements, of an input cloud application for which an optimal cloud architecture is to be determined before deployment;
identify one or more optimal cloud services from a plurality of cloud services, based on the one or more technical specifications, the one or more user requirements, the one or more service level agreements, and the one or more business specifications, using one or more Large Language Model (LLMs);
extract one or more cloud service specific parameters for each of the one or more optimal cloud services, in terms of one or more service metrics and one or more service categories, using a data extraction technique;
determine a deployment cost and one or more performance metrics of each of the one or more optimal cloud services for the input cloud application, based on the one or more service specific parameters, using one or more deployment cost models and one or more performance models, respectively; and
optimize a cloud service configuration associated with each optimal cloud service of the one or more optimal cloud services, based on the deployment cost and the one or more performance metrics, to determine an optimized cloud architecture for the input cloud application.

8. The system (100) as claimed in claim 7, wherein the one or more hardware processors (104) are further configured by the instructions to:
receive, via one or more input/output (I/O) interfaces, a current deployed cloud architecture of the input cloud application after deployment;
retrieve one or more cloud service configurations and one or more cloud services present in the current deployed cloud architecture;
generate an adjacency matrix of the input cloud application by converting the current deployed cloud architecture, wherein the adjacency matrix comprises one or more cloud service configurations, one or more cloud services and one or more objects associated with each of the one or more cloud service configurations and the one or more cloud services; and
identify one or more bottleneck cloud service configurations out of the one or more cloud service configurations and one or more bottleneck cloud services out of the one or more cloud services having the one or more bottlenecks present in the current deployed cloud architecture, based on the adjacency matrix through a Retrieval-Augmented Generation (RAG) based approach.

9. The system (100) as claimed in claim 7, wherein (i) each of the one or more optimal cloud services and (ii) each of the plurality of cloud services, comprises a cloud service configuration for one or more workload requirements, and wherein each cloud service configuration comprises one or more cloud service sub-configurations.

10. The system (100) as claimed in claim 7, wherein the one or more hardware processors (104) are configured to identify the one or more optimal cloud services from the plurality of cloud services, based on the one or more technical specifications, the one or more user requirements, the one or more service level agreements, and the one or more business specifications, using the one or more Large Language Model (LLMs), by:
pre-processing the one or more technical specifications, the one or more user requirements, the one or more service level agreements, and the one or more business specifications, using one or more data pre-processing techniques, to obtain one or more pre-processed technical specifications, one or more pre-processed user requirements, one or more pre-processed service level agreements, and one or more pre-processed business specifications, respectively;
create one or more prompts for the one or more pre-processed technical specifications, the one or more pre-processed user requirements, the one or more pre-processed service level agreements, and the one or more pre-processed business specifications, using one or more constraints; and
passing the prompt to the one or more Large Language Model (LLMs) to identify one or more optimal cloud services from the plurality of cloud services.

11. The system (100) as claimed in claim 7, wherein the one or more service metrics are a performance service metric, and a deployment cost service metric, and the one or more service categories are a compute category, a storage category, and a network category, and wherein:
(i) the one or more service specific parameters associated with the performance service metric under the compute category are: one or more service resource configurations, number of service instances, and one or more application resource requirements,
(ii) the one or more service specific parameters associated with the deployment cost service metric under the compute category are: a service instance type, an instance usage duration, an instance workload, and number of service instances,
(iii) the one or more service specific parameters associated with the performance service metric under the storage category are: a data size, a type of operation (read/write), a provisioned service instance type, and number of provisioned instances,
(iv) the one or more service specific parameters associated with the deployment cost service metric under the storage category are: a storage size, number of read/write operations, an operation type, the provisioned service instance type, number of provisioned service instances, the instance usage duration, and a provisioned storage size,
(v) the one or more service specific parameters associated with the performance service metric under the network category are: a source and destination region, a data size, and a network bandwidth, and
(vi) the one or more service specific parameters associated with the deployment cost service metric under the network category are: the source and destination region, the data size, a network usage duration, number of connections, and number of public addresses.

12. The system (100) as claimed in claim 7, wherein the one or more hardware processors (104) are configured to:
obtain the one or more performance models by training a regression model using performance benchmarking data, and
implement the one or more deployment cost models using an analytical cost model.

13. One or more non-transitory machine-readable information storage mediums comprising one or more instructions which when executed by one or more hardware processors cause:
receiving, via one or more input/output (I/O) interfaces, (i) one or more technical specifications, (ii) one or more service level agreements, (iii) one or more business specifications, and (iv) one or more user requirements, of an input cloud application for which an optimal cloud architecture is to be determined before deployment;
identifying one or more optimal cloud services from a plurality of cloud services, based on the one or more technical specifications, the one or more user requirements, the one or more service level agreements, and the one or more business specifications, using one or more Large Language Model (LLMs);
extracting, via the one or more hardware processors, one or more cloud service specific parameters for each of the one or more optimal cloud services, in terms of one or more service metrics and one or more service categories, using a data extraction technique;
determining, via the one or more hardware processors, a deployment cost and one or more performance metrics of each of the one or more optimal cloud services for the input cloud application, based on the one or more service specific parameters, using one or more deployment cost models and one or more performance models, respectively; and
optimizing, via the one or more hardware processors, a cloud service configuration associated with each optimal cloud service of the one or more optimal cloud services, based on the deployment cost and the one or more performance metrics, to determine an optimized cloud architecture for the input cloud application.

14. The one or more non-transitory machine readable information storage mediums as claimed in claim 13, wherein the one or more instructions which when executed by one or more hardware processors further cause:
receiving, via the one or more input/output (I/O) interfaces, a current deployed cloud architecture of the input cloud application after deployment;
retrieving one or more cloud service configurations and one or more cloud services present in the current deployed cloud architecture;
generating an adjacency matrix of the input cloud application by converting the current deployed cloud architecture, wherein the adjacency matrix comprises one or more cloud service configurations, one or more cloud services and one or more objects associated with each of the one or more cloud service configurations and the one or more cloud services; and
identifying one or more bottleneck cloud service configurations out of the one or more cloud service configurations and one or more bottleneck cloud services out of the one or more cloud services having the one or more bottlenecks present in the current deployed cloud architecture, based on the adjacency matrix through a Retrieval-Augmented Generation (RAG) based approach.

15. The one or more non-transitory machine readable information storage mediums as claimed in claim 13, wherein (i) each of the one or more optimal cloud services and (ii) each of the plurality of cloud services, comprises a cloud service configuration for one or more workload requirements, and wherein each cloud service configuration comprises one or more cloud service sub-configurations.
